Europäisches Patentamt

European Patent Office

Office européen des brevets

(11) Publication number: **0 292 221**
**A2**

## (12) EUROPEAN PATENT APPLICATION

(21) Application number: **88304418.2**

(22) Date of filing: **16.05.88**

(51) Int. Cl.⁴ **H02G 3/04**

(30) Priority: **16.05.87 GB 8711616**

(43) Date of publication of application:
**23.11.88 Bulletin 88/47**

(84) Designated Contracting States:
**AT BE CH DE ES FR GR IT LI LU NL SE**

(71) Applicant: **Ashley Accessories Limited**
**Morecambe Road Ulverston**
**Cumbria, LA12 9BN(GB)**

(72) Inventor: **Walker, Robert Henry**
**Sunnylea 48 Oxenholme**
**Kendal Cumbria, LA9 7HH(GB)**

(74) Representative: **Cardwell, Stuart Martin et al**
**Roystons Tower Building Water Street**
**Liverpool, Merseyside L3 1BA(GB)**

(54) **Trunking.**

(57) Trunking comprising an elongate strip (1) of material having lines of weakness (2, 3, 4) running the length thereof and matching edges (5, 7) enabling the strip to be folded up and secured as a 3-dimensional hollow section for the accommodation of, for example, electrical wiring.

FIG.1

EP 0 292 221 A2

## Trunking

The present invention relates to trunking for electrical wiring.

Plastic trunking, particularly the type known as "mini-trunking" is increasingly used for surface wiring in preference to metal or plastic conduit. The trunking consists of a three sided extruded channel section with a snap fit fourth side, completing a hollow box section. The complete box section is sold in standard lengths which are then cut on site to the required lengths, dismantled, fitted, wired and then completed with the snap fit cover.

In conjunction with various complementary fittings the system provides a safe and simple means of installing and protecting electric wiring. However, the empty box sections take up a lot of room for transportation and storage purposes, such as in contractors' van and the standard lengths are invariably the wrong length resulting in wasteful cutting and an accumulation of odd-ends and offcuts which are eventually scrapped. This makes the known trunking disadvantageous.

It is an aim of the present invention to overcome the disadvantages of known trunking.

According to the present invention, trunking for electrical wiring comprises an elongate strip of plastic material having at least one line of weakness running the length thereof enabling the strip to be folded, and edges of the strip formed to provide securing or latching means for cooperation, say snap-fitting, with one another, or with a closure member.

The ability to fold the strip according to the invention enables a 3-dimensional hollow section trunking to be formed for accommodating electrical wiring in use whilst minimising space requirements for storage and transportation prior thereto. The strip is flexible in the longitudinal direction so enabling continuous lengths thereof to be accommodated on reels for convenient storage and whereby desired lengths can be cut off as required thus minimising wastage.

It is preferred to have three spaced lines of weakness running the length of the strip enabling the trip to be folded into a box section, with the edges formed to provide cooperating latching. The lines of weakness can conveniently comprise longitudinal 'V' grooves with say 90 degrees included angle to define right angle corners on folding, or other angles as desired. The width of the strip is equivalent to four sides of the desired box section, with each side dimensioned appropriately, and edges latchingly fitting together to close it.

Preferably, two adjacent 'V' grooves are precoated with impact adhesive so that when folded together a channel section is formed comprising three sides of the box with the fourth side becoming a hinged lid to complete the enclosure.

The flat strip of desired shape can conveniently be formed as an extrusion, say of thermo-plastic material.

A hollow box section is the preferred section as this easily accommodates the electrical wiring, but it will be appreciated that alternative shapes could be employed, for example triangular by having a strip with just two lines of weakness defining the three sides.

Similarly whilst it is preferred to have, the dsired shape of trunking made up by folding from just one strip, it is feasible to employ several strip like components each of which can be supplied in reel form with at least one having a line of weakness to enable folding to give at least an 'L' section, two of which may be latched together. Another alternative is to have an open channel on a U-section folded from one strip and a separate closure member arranged for engagement therewith.

As mentioned such foldable flat strip can be coiled onto a drum which can then be used on a stand as a convenient dispenser allowing required lengths of strip to be cut without wastage. It is further envisaged to provide a guillotine and/or a measuring means incorporated in the stand of the dispensing reel. Such measuring means may be of rotary type with a wheel or roller turned by a surface of the extrusion as it is dispensed.

Accordingly, there is also provided a dispenser for trunking in the form of flat strip comprising means supporting rotatably a reel of trunking and with means for measuring the trunking reeled off and/or means for severing desired lengths of trunking from the reel.

Reference has been made above to trunking for electrical wiring, but is will be appreciated that it can have other uses, such as for accommodating piping.

The present invention will now be described further hereinafter, by way of example only, with reference to the accompanying drawings; in which:-

Figure 1 is an end view of the elongate strip;

Figure 2 is an end view of the strip when folded into the box section;

Figure 3 is an enlarged view of the latching arrangement for the strip; and

Figure 4 is a perspective view of a dispenser for the strip in reel form.

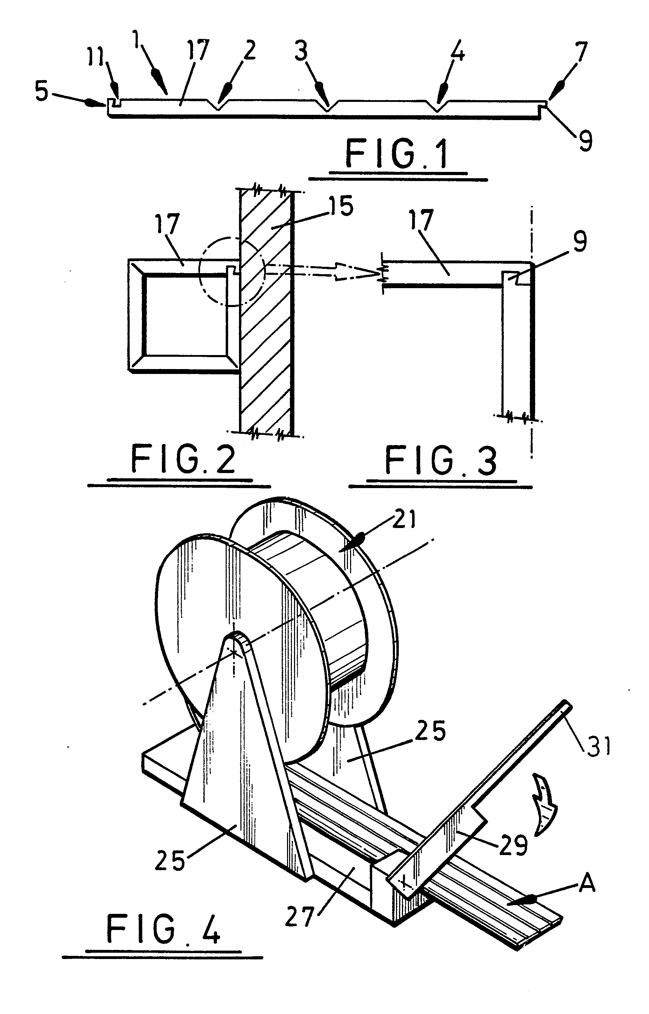

Referring more particularly to the drawings, a flat elongate strip of extruded thermo plastic material 1 is shown end on in Figure 1 as having three longitudinal 'V' grooves 2, 3, 4, which run the length thereof, and define lines of weakness, or hinge lines, permitting folding of the strip. Opposite edges 5, 7 of the strip are provided with latching means having male and female parts 9, 11 for cooperating engagement. The female latching part 11 comprises a tapered groove, diverging from its mouth to provide an interlock with a complimentary tapered male rib on the edge 7.

Figure 2 shows the strip folded into a hollow box section to form the trunking, and in position, in one possible orientation, against a wall 15. The 'V' grooves have an included angle of 90 degrees to ensure right angle corners to the trunking on folding. The lines of weakness define the four sides of the trunking. In the illustrated embodiment a contact adhesive on the inclined surfaces of the grooves 3 and 4 serves to hold three of the sides in the form of a channel on folding, with the fourth side 17 disposed as an hinged lid for latching releasably with the remote side edge of the strip as shown in Figures 2 and 3.

Alternative configurations of latching parts may be provided, but preferably providing latching without increasing strip thickness. Other shapes of trunking may be utilised with appropriate positioning of the lines of weakness to reflect, square, rectangular or triangular configurations.

Referring now to Figure 4 there is shown dispensing means for the flat strip (shown at A) described with reference to Figures 1 to 3, which strip is coiled onto a reel 21 which is journalled for rotation in a support 23 having side flanges 25 and an interconnecting base 27.,

The base carries pivotably a guillotine like device having a blade 29 with handle 31 by means of which lengths of strip can be cut off the reel. Also provided is a wheel/roller to contact the strip and provide by appropriate display means an indication of the amount of material reeled out, to simplify cutting off desired lengths.

## Claims

1. Trunking for electrical wiring or piping characterised by an elongate strip of material (1) having at least one line of weakness (2, 3, 4) running the length thereof enabling said strip to be folded, and edges (5, 7) of the strip formed to facilitate latching or securing of the folded up strip.

2. Trunking as claimed in claim 1 in which the edges are formed to facilitate latching or securing of the folded up strip with one another or with a closure member.

3. Trunking as claimed in claim 1 or 2, in which a 3-dimensional hollow section is formed by folding the elongate strip along at least two lines of weakness (2, 3, 4) to serve for the accommodation of electrical wiring or piping.

4. Trunking as claimed in claim 1, 2 or 3, wherein said strip has three spaced lines of weakness (2, 3, 4) running the length thereof to enable it to be folded into a box section.

5. Trunking as claimed in claim 4 wherein two adjacent "V" grooves are precoated with impact adhesive so that when folded together a channel section is formed comprising three sides of the box with the fourth side becoming a hinged lid to complete the enclosure.

6. Trunking as claimed in any preceding claim, wherein said lines of weakness comprise longitudinal "V" shaped grooves (2, 3, 4).

7. Trunking as claimed in claims 1, 2 or 3, wherein the trunking is made up from at least two elongate strips cooperating with each other, at least one of the strips having at least one said line of weakness.

8. Trunking as claimed in claim 7, wherein each said strip has one line of weakness to enable folding into an "L" section, two of which may be latched or secured together to form a box section.

9. Trunking as claimed in claim 7, wherein an open channel as a "U" section folded from one strip engages with a closure member formed from another strip.

10. Trunking as claimed in any one of the preceding claims wherein said strip or strips are flexible in the longitudinal direction to enable continuous lengths thereof to be accommodated on reels.

11. Trunking as claimed in any preceding claim, formed as an extrusion of thermoplastic material.

12. Trunking as claimed in any preceding claim, in which the trunking is in the form of at least one flat strip on a reel provided on a dispenser with means for severing desired lengths of the trunking from the reel.

0 292 221

FIG.1

FIG.2

FIG.3

FIG.4